(19) Europäisches Patentamt
European Patent Office
Office européen des brevets

(11) **EP 3 413 530 B1**

(12) **EUROPÄISCHE PATENTSCHRIFT**

(45) Veröffentlichungstag und Bekanntmachung des Hinweises auf die Patenterteilung:
**31.07.2019 Patentblatt 2019/31**

(51) Int Cl.:
***H04L 29/06*** *(2006.01)*

(21) Anmeldenummer: **17175275.1**

(22) Anmeldetag: **09.06.2017**

(54) **VERFAHREN UND VORRICHTUNG ZUM AUSTAUSCHEN VON NACHRICHTEN**

METHOD AND DEVICE FOR EXCHANGING MESSAGES

PROCÉDÉ ET DISPOSITIF D'ÉCHANGE DE MESSAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.12.2018 Patentblatt 2018/50**

(73) Patentinhaber: **Siemens Aktiengesellschaft**
**80333 München (DE)**

(72) Erfinder:
• **Aschauer, Hans**
**81829 München (DE)**
• **Fries, Steffen**
**85598 Baldham (DE)**

(56) Entgegenhaltungen:
**EP-A2- 2 023 573      US-A1- 2013 125 114**
**US-A1- 2017 163 618**

• **Anonymous: "Hash-based message authentication code - Wikipedia", , 8. April 2017 (2017-04-08), XP055428248, Gefunden im Internet: URL:https://en.wikipedia.org/w/index.php?title=Hash-based_message_authentication_code&oldid=774442289 [gefunden am 2017-11-23]**

**Beschreibung**

Die Erfindung bezieht sich auf ein Verfahren und eine Vorrichtung zum rechnergestützten Austauschen von Nachrichten.

Sicherheitsprotokolle wie TLS und andere nutzen während der Aushandlung eines Sitzungsschlüssels Zufallszahlen zur Erhöhung der Entropie bei der eigentlichen Schlüsselaushandlung. Darüber hinaus ermöglicht es beiden Kommunikationspartnern einen Beitrag zur Schlüsselaushandlung zu leisten, insbesondere im Falle der Nutzung einer einseitig authentisierten Verbindung, bei der der Client dem Server Informationen verschlüsselt mit dem öffentlichen Schlüssel des Servers zuschickt.

Aus dem Stand der Technik sind das Dokument US 8,531,247 B2, das Dokument US 8,892,616 B2, das Dokument US 8,300,811 B2, das Dokument US 9,147,088 B2, das Dokument EP 2 605 445 B1, das Dokument EP 2 870 565 A1, das Dokument EP 2 891 102 A1 und das Dokument US 8 843 761 B2 bekannt.

Eine Aufgabe der vorliegenden Erfindung ist es ein Verfahren und eine Vorrichtung zum rechnergestützten Austauschen von kryptographisch geschützten Nachrichten möglichst effizient zu realisieren.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Gemäß einem ersten Aspekt betrifft die Erfindung ein Verfahren zum Austauschen von Nachrichten mit folgenden Verfahrensschritten:

a) Empfangen einer ersten Nachricht mit einer ersten digitalen Signatur eines ersten Kommunikationspartners durch einen zweiten Kommunikationspartner;

b) Prüfen der ersten digitalen Signatur durch den zweiten Kommunikationspartner, wobei zum Prüfen der ersten digitalen Signatur eine erste Prüfsumme für die erste Nachricht berechnet wird;

c) Bereitstellen einer zweiten Prüfsumme für eine zweite Nachricht durch den zweiten Kommunikationspartner, wobei

- die zweite Nachricht in zweite Nachrichtenteile aufgeteilt wird,
- eine zweite Unterprüfsumme über die zweiten Nachrichtenteile bis auf einen letzten Nachrichtenteil der zweiten Nachrichtenteile gebildet wird,
- die zweite Prüfsumme anhand der zweiten Unterprüfsumme und unter Berücksichtigung des letzten Nachrichtenteils gebildet wird;

d) Bilden einer zweiten digitalen Signatur für die zweite Nachricht anhand der zweiten Prüfsumme durch den zweiten Kommunikationspartner;

e) Berechnen einer zweiten Nonce anhand der zweiten Unterprüfsumme und unter Berücksichtigung des letzten Nachrichtenteils durch den zweiten Kommunikationspartner, wobei

- für diese Berechnung an den letzten Nachrichtenteil die erste Prüfsumme angefügt wird;

f) Senden der zweiten Nachricht mit der zweiten digitalen Signatur an den ersten Kommunikationspartner durch den zweiten Kommunikationspartner.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder einem "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einer "Prüfsumme" kann im Zusammenhang mit der Erfindung beispielsweise eine kryptographische Prüfsumme oder ein kryptographischer Hash oder ein Hash verstanden werden, die insbesondere mittels einer Hashfunktion oder einer kryptographischen Hashfunktion über Nachrichten oder Nachrichtenteile gebildet oder berechnet werden. Weiterhin kann darunter insbesondere auch ein kryptographischer Nachrichtenauthentisierungscode verstanden werden.

Unter einer "Nonce" im Zusammenhang mit der Erfindung beispielsweise eine kryptographische Nonce (Abkürzung für: "used only once" "number used once") verstanden werden, die insbesondere nur ein einziges Mal in dem jeweiligen Kontext verwendet wird.

Das Verfahren ist dahingehend vorteilhaft, um beispielsweise einen kryptographischen Schutz von mehreren Nachrichten bei einem Nachrichtenaustausch zu erreichen, wobei insbesondere der kryptographischen Schutz mittels digitaler Signaturen und Nonces realisiert wird. Dabei werden die Nonces nicht direkt übermittelt, sondern können insbesondere reproduzierbar aus vorhergehenden Nachrichten berechnet werden, wobei für die jeweilige Nonce selbst eine Prüfsumme einer vorherigen Nachricht mitberücksichtigt wird. Dieses Mitberücksichtigen ist derart realisiert, dass insbesondere für das Erstellen der jeweiligen digitalen Signatur und der Nonce bestimmte kryptographische Berechnungen vorzugsweise ein einziges Mal berechnet werden und insbesondere nicht komplett separat für die jeweilige Nonce und die jeweilige digitale Signatur. Das Verfahren ist dabei insbesondere im Kontext einer Schlüsselaushandlung zwischen Kommunikationspartnern vorteilhaft. Dies ist insbesondere vorteilhaft, da bei embedded Systemen weniger Aufwand für die Berechnung der digitalen Signatur der Schlüsselaushandlungsnachrichten benötigt wird. Vorzugsweise kann dadurch der Aufwand für die Hashoperation bei der eigentlichen digitalen Signatur vernachlässigt werden. Darüber hinaus wird insbesondere beim Nachrichtenaustausch (z. B. bei einer der Schlüsselaushandlung) anstatt die benötigte Bandbreite für die Nachrichten reduziert, da die Nonces insbesondere nicht mitgeschickt werden müssen. Darüber hinaus wird insbesondere durch die Einbeziehung der vorherigen Nachricht in die Berechnung der aktuellen Nonce eine Verkettung der Nachrichten in der entsprechenden Reihenfolge erreicht.

Bei einer ersten Ausführungsform des Verfahrens werden durch den ersten Kommunikationspartner vor dem Empfangen in Verfahrensschritt a) folgende Verfahrensschritte ausgeführt:

aa) Berechnen der ersten Prüfsumme für die erste Nachricht, wobei

- die erste Nachricht in erste Nachrichtenteile aufgeteilt wird,
- eine erste Unterprüfsumme über die ersten Nachrichtenteile bis auf einen letzten Nachrichtenteil der ersten Nachrichtenteile gebildet wird,
- die erste Prüfsumme anhand der ersten Unterprüfsumme und unter Berücksichtigung eines letzten Nachrichtenteils der ersten Nachrichtenteile gebildet wird;

ab) Bilden der ersten digitalen Signatur für die erste Nachricht anhand der ersten Prüfsumme;

ac) Berechnen einer ersten Nonce anhand der ersten Unterprüfsumme und unter Berücksichtigung des letzten Nachrichtenteils, wobei

- für diese Berechnung an den letzten Nachrichtenteil der ersten Nachricht ein Initialisierungswert angefügt wird;

ad) Senden der ersten Nachricht mit der ersten digitalen Signatur an den zweiten Kommunikationspartner.

Das Verfahren ist dahingehend vorteilhaft, um insbesondere auf einfache Weise eine Nonce für die erste Nachricht zu berechnen ohne diese mit der Nachricht mitzuschicken. Es kann beispielsweise bei einer Initialisierung des Verfahrens im Schritt ac) bei der Berechnung Initialisierungswert angefügt werden anfügen zu können, damit für die erste Nonce die Wahrscheinlichkeit einer Mehrfachverwendung der Nonce minimiert wird. Der Initialisierungswert hat vorzugsweise die gleiche Länge wie die erste Prüfsumme, z. B. 256 bit.

Bei einer weiteren Ausführungsform wird für die Nachrichtenteile eine feste Nachrichtenteillänge vorgegeben, und es ergibt sich für die letzten Nachrichtenteile jeweils eine Restnachrichtenteillänge, die kleiner oder gleich der Nachrichtenteillänge ist.

Das Verfahren ist dahingehend vorteilhaft, um insbesondere die entsprechenden Prüfsummen leichter zu berechnen. Insbesondere wird für die Berechnung einer Prüfsumme eine Nachricht M der Länge m in Nachrichtenteile (oder auch Teilnachrichten genannt) der Länge l zerlegt. Um beispielsweise die Prüfsumme für Nachrichten beliebiger Länge berechnen zu können, wird insbesondere durch ein sog. Padding die Nachricht aufgefüllt, so dass das Resultat eine Nachricht M' ist, deren Länge m' ein Vielfaches von l ist. Sofern das Padding beispielsweise eine Mindestlänge p > 0 hat, wird für den Fall, dass das Padding nicht mehr in den letzten Block (auch Nachrichtenteil genannt) passt (d.h. wenn m modulo l > l - p), eine weitere Teilnachricht angehängt, die nur aus Padding besteht.

Beispielsweise kann eine Anzahl d Nachrichtenteile für eine Nachricht mit Länge m und einer Nachrichtenteillänge l wie folgt berechnet werden: d = m/l, wobei sich die Restnachrichtenteillänge e aus e = m modulo l ergibt.

Bei einer weiteren Ausführungsform des Verfahrens ist die Nachrichtenteillänge ein ganzzahliges Vielfaches von 64 Bit und die Nachrichtenteillänge insbesondere ist 256 Bit oder 512 Bit lang.

Bei einer weiteren Ausführungsform des Verfahrens wird mittels der Nachrichten Schlüsselmaterial für ein kryptographisches Verfahren zwischen den Kommunikationspartnern ausgetauscht oder das Ergebnis geht in eine Schlüsselableitung ein.

Das Verfahren ist dahingehend vorteilhaft, um insbesondere mit möglichst wenigen kryptographischen Hash-Operationen das Schlüsselmaterial zwischen den Kommunikationspartnern zu etablieren.

Mit den Nachrichten könnte man insbesondere auch Public Key Encryption nutzen und den Schlüssel verschlüsseln oder alternativ ein signiertes Diffie Hellman Verfahren umsetzen.

Bei einer weiteren Ausführungsform des Verfahrens ist die erste Prüfsumme und/oder die zweite Prüfsumme ein kryptographischer Hash.

Bei einer weiteren Ausführungsform des Verfahrens werden die erste Prüfsumme und/oder die zweite Prüfsumme mittels einer kryptographischen Hashfunktion berechnet.

Bei einer weiteren Ausführungsform des Verfahrens werden für weitere Nachrichten jeweils weitere digitale Signaturen und weitere Nonces durch den ersten Kommunikationspartner und/oder den zweiten Kommunikationspartner entsprechend der Verfahrensschritte a) - e) berechnet und die weiteren Nachrichten mit ihren jeweiligen weiteren digitalen Signaturen an den entsprechenden Kommunikationspartner gesendet.

Dabei werden insbesondere jeweils weiter Unterprüfsummen berechnet und insbesondere bei der Berechnung der jeweiligen weiteren Nonce wird die Prüfsumme der vorherigen Nachricht berücksichtigt.

Das Verfahren ist dahingehend vorteilhaft, um insbesondere mehrere Nachrichten kryptographisch zu schützen und einen Man-In-The Middle-Angriff zu erschweren.

Gemäß einem weiteren Aspekt betrifft die Erfindung eine Vorrichtung zum Senden einer Nachricht umfassend:

- ein erstes Kommunikationsmodul zum Empfangen einer ersten Nachricht mit der ersten digitalen Signatur;
- ein erstes Prüfmodul zum Prüfen der ersten digitalen Signatur, wobei zum Prüfen der ersten digitalen Signatur eine erste Prüfsumme berechnet wird;
- ein erstes Bereitstellungsmodul zum Bereitstellen einer zweiten Prüfsumme für eine zweite Nachricht, wobei
- die zweite Nachricht in zweite Nachrichtenteile aufgeteilt wird,
- eine zweite Unterprüfsumme über die zweiten Nachrichtenteile bis auf einen letzten Nachrichtenteil der zweiten Nachrichtenteile gebildet wird,
- die zweite Prüfsumme anhand der zweiten Unterprüfsumme und unter Berücksichtigung des letzten Nachrichtenteils gebildet wird;
- ein erstes Berechnungsmodul zum Bilden einer zweiten digitalen Signatur für die zweite Nachricht anhand der zweiten Prüfsumme;
- ein zweites Berechnungsmodul zum Berechnen einer zweiten Nonce anhand der zweiten Unterprüfsumme und unter Berücksichtigung des letzten Nachrichtenteils, wobei
- für diese Berechnung an den letzten Nachrichtenteil die erste Prüfsumme angefügt wird,
- das erste Kommunikationsmodul die zweite Nachricht übermittelt.

Bei einer weiteren Ausführungsform der Vorrichtung umfasst die Vorrichtung zumindest ein weiteres Modul oder mehrere weitere Module zur Durchführung des erfindungsgemäßen Verfahrens (oder einer seiner Ausführungsformen).

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannten erfindungsgemäße Vorrichtung erstellt werden.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass die erfindungsgemäße Vorrichtung erstellt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:

Fig. 1 ein erstes Ausführungsbeispiel der Erfindung als ein Ablaufdiagramm;

Fig. 2 ein weiteres Ausführungsbeispiel der Erfindung;

Fig. 3 ein weiteres Ausführungsbeispiel der Erfindung;

Fig. 4 ein weiteres Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies explizit in dem jeweiligen Ausführungsbeispiel genannt sein muss.

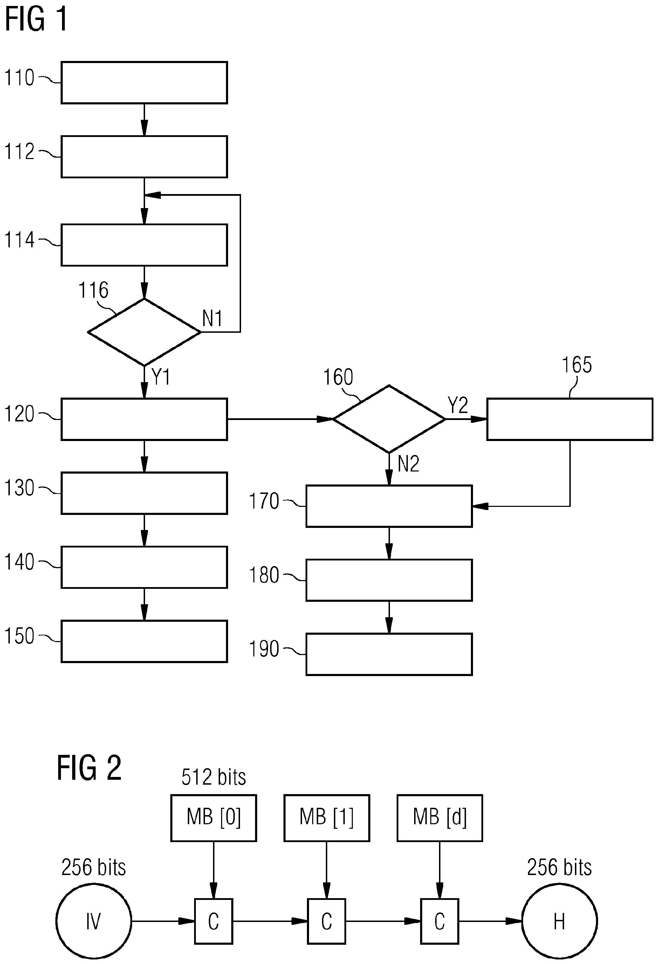

Die Fig. 1 zeigt ein erstes Ausführungsbeispiel der Erfindung als ein Ablaufdiagramm des erfindungsgemäßen Verfahrens zum Austauschen von Nachrichten. Das Verfahren wird vorzugsweise rechnergestützt realisiert, wobei insbesondere die Nachrichten durch das Verfahren kryptographisch geschützt sind. Das Verfahren kann beispielsweise von einem ersten Kommunikationspartner und einem zweiten Kommunikationspartner realisiert werden, um beispielsweise kryptographisches Schlüsselmaterial für eine kryptographisch geschützte Kommunikation untereinander auszutauschen.

Das Verfahren umfasst einen Verfahrensschritt 110 indem eine erste Nachricht für einen Schlüsselaustausch durch einen ersten Kommunikationspartner generiert wird. Dies ist ähnlich zu dem bekannten Verfahren wie das Diffie-Hellman Schlüsselaustauschverfahren.

Das Verfahren umfasst einen Verfahrensschritt 112 zum Berechnen der ersten Prüfsumme für eine erste Nachricht durch den ersten Kommunikationspartner, wobei die erste Nachricht in erste Nachrichtenteile aufgeteilt wird. Für die Nachrichtenteile ist dabei vorzugsweise eine feste Nachrichtenteillänge z. B. 512 Bit vorgegeben.

In der Praxis kann für die Berechnung einer Prüfsumme eine Nachricht M der Länge m in Teilnachrichten der Länge l zerlegt. Um die Prüfsumme für Nachrichten beliebiger Länge berechnen zu können, wird i.d.R. durch ein sog. Padding die Nachricht aufgefüllt, so dass das Resultat eine Nachricht M' ist, deren Länge m' ein Vielfaches von l ist. Sofern das Padding eine Mindestlänge p > 0 hat, wird für den Fall, dass das Padding nicht mehr in den letzten Block passt (d.h. wenn m modulo l > l - p), einen weiteren Padding-Nachrichtenteil angehängt, die nur aus Padding besteht.

Beispielsweise kann eine Anzahl d an Nachrichtenteilen für eine Nachricht (oder auch ursprüngliche Nachricht) M mit Länge m und einer festen Nachrichtenteillänge l wie folgt berechnet werden: d = m/l, wobei sich eine Restnachrichtenteillänge e aus e = m modulo l ergibt.

Der Vollständigkeit halber wird noch kurz erläutert wie sich eine Anzahl an Nachrichtenteilen für eine Nachricht (z. B. Nachricht M') mit Padding(bits) ergibt(also eine Anzahl an Nachrichtenteilen, die sich durch das Padding ergeben) lässt sich wie folgt berechnen

$$d_g = m/l + g$$

wobei g = 0 oder g = 1, je nachdem, ob eine zusätzlicher Nachrichtenteil für das Padding erforderlich ist; g = 0 bedeutet, dass keine zusätzliche Padding-Teilnachricht erforderlich ist, die nur aus Paddingbits besteht erforderlich ist und g = 1 bedeutet, dass eine zusätzliche Padding-Teilnachricht erforderlich ist. Dies ist aber für den erfinderischen Kern nachrangig, da dies insbesondere übliche Padding-Verfahren sind, die einem Fachmann bekannt sind.

Die entsprechenden ersten (oder zweiten oder weiteren) Nachrichtenteile können dann von 0 bis d durchnummeriert (wenn z. B. d abgerundet wird) oder indiziert werden, wobei d der letzte Nachrichtenteil der (ersten) Nachrichtenteile ist und 0 der erste Nachrichtenteil der (ersten) Nachrichtenteile ist. In einer anderen Implementierungsvariante kann auch anders gezählt werden, wenn z. B. d aufgerundet wird, kann auch bei 1 mit der Durchnummerierung begonnen werden. Nachfolgend wird jedoch von der Nummerierung von 0 bis d ausgegangen.

Es wird als nächstes eine erste Unterprüfsumme über die ersten Nachrichtenteile bis auf einen letzten Nachrichtenteil d der ersten Nachrichtenteile gebildet. Mit anderen Worten wird über die ersten Nachrichtenteile 0 bis d-1 die erste Unterprüfsumme gebildet. Dies erfolgt, indem beispielsweise Teilprüfsummen nacheinander für die entsprechenden Nachrichtenteile also jeweils über den Nachrichtenteil 0 bis Nachrichtenteil d - 1 in einem Verfahrensschritt 114 durch den ersten Kommunikationspartner berechnet werden. Dabei wird jeweils in einem Verfahrensschritt 116 geprüft ob der vorletzte Nachrichtenteil d-1 erreicht ist. Ist der vorletzte Nachrichtenteil d-1 noch nicht erreicht (Pfad N1) werden für den entsprechenden Nachrichtenteil die entsprechende Teilprüfsumme gebildet.

Nachfolgend wird zu einer möglichen Realisierung des Verfahrens in diesem Ausführungsbeispiel Bezug auf OpenSSL genommen. Einige der explizit erläuterten Verfahrensschritte bzw. Merkmale werden dabei implizit durch OpenSSL durchgeführt. Dies sind z. B. das Padding oder das Aufteilen der Nachricht in Teilnachrichten. Deren Nennung dient nur dem besseren Verständnis des Verfahrens.

Zur Berechnung dieser Teilprüfsummen können beispielsweise eine kryptographische Hashfunktion verwendet werden, wie z. B. SHA256, die durch die Bibliothek OpenSSL verfügbar ist. Im Einzelnen wird zunächst die kryptographische Hashfunktion initialisiert, z. B. indem SHA256_Init(CTX,...) aufgerufen wird, wobei CTX Kontextdaten für den SHA Algorithmus sind. Danach werden für die entsprechenden Nachrichtenteile die jeweiligen Teilprüfsummen berechnet. Dies kann beispielsweise dadurch erfolgen, dass SHA256_Update(CTX, Nachrichtenteil,...) für den jeweiligen entsprechenden Nachrichtenteil aufgerufen wird.

Die SHA_Update-Funktion arbeitet dabei wie folgt. Diese speichert alle Daten, die noch nicht einen vollen Nachrichtenteil ergeben (also deren Länge nicht der festen Nachrichtenteillänge entspricht), zwischen, um sie beim nächsten SHA_Update oder beim SHA_Final Aufruf zu berücksichtigen. Diese Daten sind insbesondere in den Kontextdaten abgespeichert.

Wird der vorletzte Nachrichtenteil erreicht (Pfad Y1) so wird die noch unvollständige Prüfsumme für die erste Nachricht als die erste Unterprüfsumme zwischengespeichert, wobei erste Unterprüfsumme bedeutet, dass bisher insbesondere nur die Teilprüfsummen für die ersten Nachrichtenteile 0 bis d-1 berechnet wurden.

Dies geschieht beispielsweise dadurch, dass die Kontextdaten CTX der OpenSSL Implementierung von SHA-256 in einem Verfahrensschritt 120 durch den ersten Kommunikationspartner kopiert werden, wobei die kopierten Kontextdaten auch als CTX_K bezeichnet werden. Es existieren zu diesem Zeitpunkt vorzugsweise also zwei gespeicherte Datenstrukturen CTX und CTX_K die jeweils einen Teil der entsprechenden Unterprüfsumme bilden.

Eine Unterprüfsumme kann dabei beispielsweise die Kontextinformationen (auch Kontext oder Kontextdaten) umfassen bzw. bei einer konkreten Implementierung diesen beispielsweise auch entsprechen, wenn die Teilprüfsumme für den vorletzten Nachrichtenteil d-1 berechnet wurde. Nach der Berechnung der Teilprüfsumme für den vorletzten Nachrichtenteil d-1 entspricht also beispielsweise die Kontextinformation CTX für die SHA-Implementierung von OpenSSL der Unterprüfsumme bzw. bildet zumindest einen Teil der jeweiligen Unterprüfsumme (z. B. erste/zweite Unterprüfsumme).

Bei der Berechnung der Teilprüfsummen kann in einer Variante beispielsweise für die jeweilige Teilprüfsumme insbesondere die vorhergehende Teilprüfsumme (sofern vorhanden) eines jeweiligen Nachrichtenteils mit berücksichtigt werden.

Danach wird die erste Prüfsumme anhand der ersten Unterprüfsumme und unter Berücksichtigung eines letzten Nachrichtenteils der ersten Nachrichtenteile in einem Verfahrensschritt 130 durch den ersten Kommunikationspartner gebildet. Hierzu wird dann beispielsweise der letzte Nachrichtenteil d mit mittels Padding zunächst auf die letzte Nachrichtenteillänge aufgefüllt, falls die Restnachrichtenteillänge e ungleich 0 ist. Die entsprechende Prüfsumme (z. B. erste oder zweite Prüfsumme) wird dann berechnet, in dem beispielsweise eine Teilprüfsumme des letzten Nachrichtenteils in Abhängigkeit von der Teilprüfsumme des vorhergehenden Nachrichtenteils (Nachrichtenteil d-1) berücksichtigt wird. Dies wird beispielsweise dadurch realisiert, in dem die Funktion SHA256_Final (CTX ...) die (erste) Prüfsumme berechnet.

Mit anderen Worten muss aber nicht mehr die gesamte erste Nachricht eingehen, sondern nur der "Überstand" d (also der letzte Nachrichtenteil) berücksichtigt werden.

Eine erste digitale Signatur für die erste Nachricht wird dann in einem Verfahrensschritt 140 durch den ersten Kommunikationspartner dadurch gebildet, indem beispielsweise die digitale Signatur über die erste Prüfsumme berechnet wird.

In einem Verfahrensschritt 150 wird dann die erste Nachricht mit der ersten digitalen Signatur an den zweiten Kommunikationspartner durch den ersten Kommunikationspartner gesendet. Dabei wird insbesondere ausschließlich die erste Nachricht und die erste digitale Signatur versendet ohne die erste Nonce.

Nachfolgend wird erläutert, wie eine erste Nonce anhand der ersten Unterprüfsumme und unter Berücksichtigung des letzten unmodifizierten Nachrichtenteils (also der letzte Nachrichtenteil ohne das vorher genannte Padding) berechnet wird.

Allgemein wird zunächst in einem Verfahrensschritt 160 überprüft, ob eine Prüfsumme einer vorherigen Nachricht vorhanden ist. Da der ersten Nachricht keine weitere Nachricht vorhergegangen ist (Pfad N2), existiert keine Prüfsumme einer vorherigen Nachricht, die z. B. bei einer Prüfung einer digitalen Signatur durch einen Kommunikationspartner (hier z. B. der erste Kommunikationspartner) berechnet worden wäre. Wäre eine Prüfsumme einer vorherigen Nachricht vorhanden (Pfad Y2) so würde diese Prüfsumme an den letzten Nachrichtenteil d der ersten Nachricht (also an das Ende des letzten Nachrichtenteils d) in einem Verfahrensschritt 165 angehängt werden. In einem solchen Fall (Prüfsumme vorhanden) wird also vorzugsweise direkt an das Ende des letzten Nachrichtenteils die Prüfsumme der vorhergehenden Nachricht angefügt (was auch als eingefügt, angehängt und dergleichen bezeichnet werden kann).

Da jedoch für die erste Nachricht eine entsprechende Prüfsumme einer vorhergehenden Nachricht nicht verfügbar ist (Pfad N2), wird dem letzten Nachrichtenteil d ein Initialisierungswert (z. B. eine Zufallszahl, 0-Bits oder ein anderes Bitmuster) angehängt, der vorzugsweise die gleiche Länge wie die erste Prüfsumme hat. Alternativ kann beispielsweise an den letzten Nachrichtenteil d kein Initialisierungswert angehängt werden.

Für die Berechnung der (ersten) Nonce ist zu diesem Zeitpunkt der letzte Nachrichtenteil d noch nicht mit Padding bearbeitet worden. Dies kann beispielsweis dadurch realisiert werden, in dem entweder die Padding-Bits wieder abgeschnitten werden oder der unmodifizierte letzte Nachrichtenteil (also ohne Padding) zwischengespeichert wurde.

Die berechnete (erste) Nonce wird dann vorzugsweise bei einer Schlüsselableitung mitverwendet.

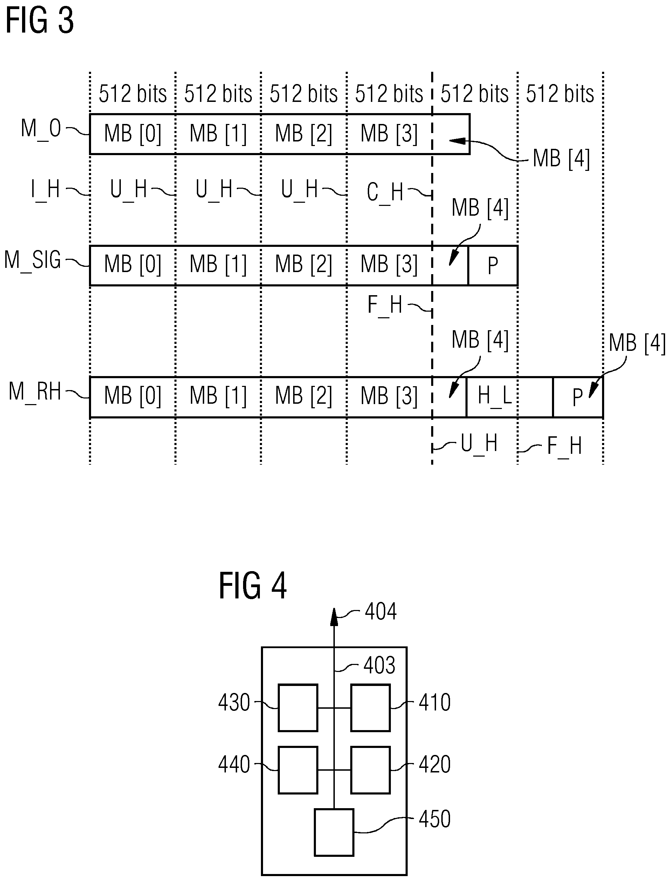

Danach wird erst das Padding für den letzten Nachrichtenteil durchgeführt und für den letzten Nachrichtenteil (ggf. inklusive der Prüfsumme der vorhergehenden Nachricht oder des Initialisierungswertes) eine Teilprüfsumme in einem Verfahrensschritt 170 gebildet, die vorzugsweise in Abhängigkeit von der vorhergehenden Teilprüfsumme gebildet wird. Dies wird beispielsweise dadurch realisiert, in dem zuerst die Funktion SHA256_Update(CTX_K, "0", ...) und anschließend die Funktion SHA256_Final(digest, CTX_K) aufgerufen wird. Ist die Länge des letzten Nachrichtenteils (aufgrund der Länge der Prüfsumme bzw. des Initialisierungswertes) jedoch größer als die zuvor bestimmte Länge der Teilnachrichten, muss noch eine zusätzliche Teilprüfsumme mittels SHA256_Update berechnet werden (entsprechend ergeben sich dadurch d+1 Nachrichtenteile, wobei der d+1 Nachrichtenteil der letzte Nachrichtenteil ist und der zusätzliche Nachrichtenteil der d-te Nachrichtenteil ist). Dies ist beispielsweise weiter unten in diesem Ausführungsbeispiel und in Fig. 3 genauer erläutert, wie in einem solchen Fall mit dem zusätzlichen/überhängenden Nachrichtenteil verfahren wird.

Daraus ergibt sich dann in einem Verfahrensschritt 180 die erste Nonce, die vorzugsweise zu internen Verwendung (z. B. zur Nutzung bei einem Schlüsselaustausch) von dem (ersten) Kommunikationspartner in einem Verfahrensschritt 190 gespeichert.

Etwas vereinfacht und verallgemeinert kann das Verfahren zur Berechnung der digitalen Signatur und der Nonce wie folgt durchgeführt werden.

Seien M1 = M | E1 und M2 = M | E2 zwei Nachrichten, die im ersten Teil (M) übereinstimmen. Dabei sind M die Nachrichtenteile bis auf den letzten Nachrichtenteil d, wie dies oben erwähnt wurde. Dann kann man die Prüfsummen H1 = H(M1) und H2 = H(M2) so berechnen:

```
SHA_Init(CTX)

SHA_Update(CTX, M)

CTX_K = copy(CTX)

SHA_Update(CTX, E1)

SHA_Update(CTX_K, E2)

H1 = SHA_Final(CTX)

H2 = SHA_Final(CTX_K)
```

Die Logik, die in SHA_Update und SHA_Final enthalten ist, implementiert das dann genau so wie beschrieben; insbesondere das Zerlegen der Nachricht in Teilnachrichten und die korrekte Behandlung des Padding. Ebenfalls wird beispielsweise in den Kontextdaten CTX der überhängende/zusätzliche Nachrichtenteil der zu hashenden Nachricht gespeichert, der noch nicht berücksichtigt wurde.

Wird nun die erste Nachricht mit der ersten digitalen Signatur durch den zweiten Kommunikationspartner empfangen, prüft dieser zunächst die erste digitale Signatur. Hierfür bildet der zweite Kommunikationspartner eine (lokale) erste Prüfsumme und berechnet über diese eine digitale Signatur, die bei einer unveränderten ersten Nachricht, der ersten digitalen Signatur des ersten Kommunikationspartners entspricht. Folglich entspricht die (lokale) erste Prüfsumme des zweiten Kommunikationspartners der ersten Prüfsumme des ersten Kommunikationspartners, wenn die erste Nachricht unverfälscht ist. Stimmen diese Signaturen/Prüfsummen nicht überein, ist die Nachricht verfälscht und das Verfahren endet bzw. es werden keine kryptographischen Schlüssel ausgetauscht. Für das Ausführungsbeispiel wird jedoch davon ausgegangenen, dass keine Nachricht verfälscht wurde.

Nun bildet der zweite Kommunikationspartner analog zum ersten Kommunikationspartner eine erste Nachricht. Für diese zweite Nachricht wird analog zur ersten Nachricht entsprechend durch den zweiten Kommunikationspartner eine zweite Prüfsumme berechnet, wobei die zweite Nachricht in zweite Nachrichtenteile aufgeteilt wird (analog zur ersten Nachricht). Entsprechend wird auch eine zweite Unterprüfsumme über die zweiten Nachrichtenteile bis auf einen letzten Nachrichtenteil der zweiten Nachrichtenteile gebildet (analog zur ersten Unterprüfsumme). Auch wird analog zur ersten Prüfsumme die zweite Prüfsumme anhand der zweiten Unterprüfsumme und unter Berücksichtigung des letzten Nachrichtenteils gebildet.

Analog zur ersten digitalen Signatur wird entsprechend durch den zweiten Kommunikationspartner eine zweite digitale Signatur für die zweite Nachricht gebildet.

Bei der Berechnung einer zweiten Nonce durch den zweiten Kommunikationspartner wird - analog zur ersten Nonce - die zweiten Unterprüfsumme und der letzte Nachrichtenteil der zweiten Nachrichtenteile der zweiten Nachricht entsprechend durch den zweiten Kommunikationspartner berücksichtigt. Da jedoch eine Prüfsumme einer vorherigen Nachricht (also die (lokale) erste Prüfsumme) verfügbar ist, wird für diese Berechnung an den letzten Nachrichtenteil die erste Prüfsumme angefügt und danach erst das Padding durchgeführt. Die zweite Nonce kann beispielsweise dadurch realisiert, indem wieder die Funktion SHA256_Final(CTX_K, zweite Nachricht, ...) für die zweiten Nachrichtenteile unter der erwähnten Berücksichtigung der ersten Prüfsumme aufgerufen wird. Die daraus resultierende zweite Nonce wird vorzugsweise zu internen Verwendung (z. B. zur Nutzung bei einem Schlüsselaustausch) von dem zweiten Kommunikationspartner gespeichert.

Danach sendet der zweite Kommunikationspartner die zweite Nachricht mit der zweiten digitalen Signatur an den ersten Kommunikationspartner.

Bei dem genannten Verfahren wird insbesondere davon ausgegangen, dass die Teilprüfsummen nacheinander von 0 bis d bzw. d-1 bzw. d+1 gebildet werden und somit insbesondere eine implizite Reihenfolge gegeben ist. Genauer werden beispielsweise für die entsprechende Unterprüfsumme einer entsprechenden Nachricht die Nachrichtenteile 0 bis d-1 berücksichtigt. Für die Prüfsumme der entsprechenden Nachricht werden dann die Nachrichtenteile 0 bis d-1 mittels der entsprechenden Unterprüfsumme und der Nachrichtenteil d berücksichtigt. Für eine entsprechende Nonce der entsprechenden Nachricht werden beispielsweise dann die Nachrichtenteile 0 bis d-1 mittels der entsprechenden Unterprüfsumme, der Nachrichtenteil d und ggf. der Nachrichtenteil d+1 berücksichtigt, wobei insbesondere der Nachrichtenteil d durch den Initialisierungswert/vorhergehenden Prüfsumme einer vorhergehenden Nachricht modifiziert wird (und sich dadurch unter Umständen ein weiterer Nachrichtenteil d+1 ergibt, der dann vorzugsweise den letzten Nachrichtenteil repräsentiert).

Mit anderen Worten wird mit der Erfindung erreicht, dass auf das Mitschicken der Nonces bei einem Schlüsselaustausch verzichtet werden kann. Zudem lassen sich die Anzahl der Aufrufe von kryptographischen Funktion reduzieren, da durch eine geschickte Wahl der Anordnung der Daten (das Anhängen einer Prüfsumme der vorherigen Nachricht an den letzten Nachrichtenteil einer (aktuellen) Nachricht) die Unterprüfsummen für die entsprechenden Prüfsummen und den entsprechenden Nonces einer entsprechenden Nachricht verwendet werden können. Entsprechend wird die Zahl der notwendigen Hash-Operationen die bei einem Schlüsselaustausch notwendig sind gegenüber von konventionellen Schlüsselaustauschverfahren optimiert/reduziert.

Das Verfahren ist dahingehend vorteilhaft, dass die Nonces nicht mehr als Teil der Nachrichten bei einem Schlüsselaustausch geschickt werden müssen, sondern lokal berechnet werden können. Mittels des Verfahrens werden zudem die Anzahl der durchgeführten Operationen in der konkreten Kombination mit digitalen Signaturen optimiert. Damit kann die entsprechende Unterprüfsumme jeweils für die digitale Signatur und die entsprechenden Nonce genutzt werden, sodass die kryptographischen Operationen für die Nonce und die digitale Signatur in Summe signifikant reduziert werden. Dadurch kann die Berechnung der digitalen Signatur und der Nonce deutlich vereinfacht werden.

Dabei kann beispielsweise eine Hash Funktion mit einer fixen Blockgröße (Nachrichtenteillänge) verwendet werden. Dazu wird - wie oben erwähnt - SHA-256 verwendet, um das gewünschte Ergebnis zu erzielen. Im Einzelnen nutzt SHA-256 nutzt dazu 512 Bit Blöcke (also eine Nachrichtenteillänge von 512 Bit) wie in Fig. 2 dargestellt.

Im Einzelnen zeigt die Fig. 2 vereinfacht für eine Nachricht mit SHA-256 eine Prüfsumme H berechnet wird. Das SHA-256 Verfahren wird mit Kontextdaten und einem Schlüssel - vereinfacht als IV dargestellt - initialisiert. Danach wird eine Nachricht in Nachrichtenteile MB zerlegt und für die entsprechenden Nachrichtenteile MB[0] bis MB[d] (d ist wie oben erwähnt die Anzahl der Nachrichtenteile) werden jeweils Teilprüfsummen C berechnet, aus denen sich die Prüfsumme H ergibt.

Wird - wie oben bereits erläutert - die SHA-256 aus OpenSSL verwendet, wird durch OpenSSL folgendes Interface bereitgestellt.

- Initialisierung: SHA256_Init(CTX)
- Update: SHA256_Update(CTX, data, datalength), Aufruf der Hash Operation für jeden kompletten 512 Bit Block erfolgt intern in der Funktion
- Finale Runde: SHA256_Final(digest, CTX)., Aufruf für den letzten Block

Um die Anzahl der Aufrufe von kryptographischen Funktionen zu reduzieren wird vorgeschlagen die Daten wie folgt anzuordnen:

$$h_n = \text{hash}(\text{Nachricht} \,||\, h_{n-1}) \text{ mit } h_0 = 0,$$

wobei h eine Prüfsumme einer Nachricht ist und 0 bis n ein Zähler für die Nachrichten ist.

Bei der Berechnung können nun die Daten für Nonces und die digitale Signatur bis zum letzten Nachrichtenteil einer jeweiligen Nachricht gleichbehandelt werden, indem die Unterprüfsumme verwendet bzw. zwischengespeichert wird.

Im Falle der digitalen Signatur wird die entsprechende Prüfsumme beispielsweise mit der letzten Runde (also Berechnung der Teilprüfsumme für den letzten Nachrichtenteil) abgeschlossen. Im Falle eine Nonce erfolgt insbesondere zusätzlich das Anfügen der Prüfsumme der vorangegangenen Nachricht. Dies kann beispielsweise zu einer zusätzlichen Runde (es ergibt sich also mindestens ein zusätzlicher Nachrichtenteil für den jeweils eine Teilprüfsumme berechnet wird) beim Berechnen der Prüfsumme bzw. der Teilprüfsumme führen, da die Prüfsumme der vorangegangenen Nachricht eine Größe von 256 Bit hat und somit der letzte Nachrichtenteil die Nachrichtenteillänge von 512 Bit überschreiten kann.

In einem solchen Fall ergeben sich d+1 Nachrichtenteile, wobei für den Nachrichtenteil d (z. B. mit SHA_Update) und den Nachrichtenteil d+1 (z. B. mit SHA_Final) dann die entsprechenden Teilprüfsummen berechnet werden. Dabei kann der Nachrichtenteil d als überhängender Nachrichtenteil (oder zusätzlicher Nachrichtenteil) bezeichnet werden und d+1 als letzter Nachrichtenteil bezeichnet werden. Der letzte Nachrichtenteil d+1 wird dann - wie oben erläutert - ebenfalls mit Padding auf die entsprechende Nachrichtenteillänge gebracht und dann - wie oben erläutert - die entsprechende Nonce für die jeweilige Nachricht berechnet.

Im Falle von OpenSSL würde eine entsprechende Nachricht bis zum vorletzten Nachrichtenteil d-1 gehashed werden (durch den Aufruf von SHA256_Update(CTX, data, datalength). Vor dem Aufruf der Funktion SHA256_Finalwird die Kontextdaten (also mit der Unterprüfsumme) in eine neue Struktur CTX_K kopiert, um die Unterprüfsumme zwischen zu speichern.

Um die entsprechende Prüfsumme für die Signatur über die Daten zu berechnen, ruft man SHA256_Final(digest, CTX) auf, wobei digest die Prüfsumme ist.

Zur Berechnung der Nonce ruft man SHA256_Update(CTX_K, $h_n$-1, len($h_n$-1)), gefolgt von SHA256_Final(digest1, CTX_K) auf, wobei digestl die Nonce ist.

Die Fig. 3 zeigt wie das Bilden der Prüfsumme und der Nonce aus den vorherigen Ausführungsbeispielen realisiert sein kann.

Eine Nachricht M_O hat eine Nachrichtenlänge m von 2348 Bit. Bei einer festen Nachrichtenteillänge l von 512 Bit ergeben sich 0 ... 4 Nachrichtenteile MB[i] (i ist der Index um einen entsprechenden Nachrichtenteil auszuwählen), wobei 4 der letzte Nachrichtenteil MB[4] ist. Dabei ergibt sich mit e = m modulo l eine Restnachrichtenteillänge e = 300.

Um bei der bereits genannten SHA-256 Implementierung von OpenSSL zu bleiben, wird zunächst (wie oben erläutert) SHA256_Init I_H zur Initialisierung aufgerufen. Danach wird für jeden Nachrichtenteil bis auf den letzten Nachrichtenteil als 0 bis d-1 bzw. MB[0] bis MB[3] jeweils mittels SHA256_Update U H eine Teilprüfsumme für die entsprechenden Nachrichtenteile MB[0 bis d-1] berechnet, die beispielsweise jeweils (sofern möglich) die Teilprüfsumme des vorherigen Nachrichtenteils berücksichtigen. Die entsprechenden Teilprüfsummen können beispielsweise in der Kontextinformation (oder auch nur Kontext genannt) gespeichert werden.

Nun wird der Kontext bzw. die Unterprüfsumme (die Unterprüfsumme umfassend die Teilprüfsumme für Nachrichtenteile bis zum vorletzten Nachrichtenteil d-1 und optional die Kontextdaten des SHA-Verfahrens) zwischengespeichert C H und kann beispielsweise - wie in den vorhergehenden Ausführungsbeispielen - CTX K genannt werden. Wie in den vorhergehenden Ausführungsbeispielen erläutert existieren zu diesem Zeitpunkt vorzugsweise zwei Unterprüfsummen, die Unterprüfsumme CTX und die kopierte Unterprüfsumme CTX_K. Dies ist insbesondere ein Implementierungsdetail, das der spezifischen Implementierung des SHA-Verfahrens durch OpenSSL geschuldet ist.

Auch andere Verfahren/Realisierungsvariante sind denkbar in denen die Schnittstellen/Interfaces die OpenSSL bereitstellt angepasst werden. Beispielsweise kann durch den SHA-Final Aufruf die Unterprüfsumme bzw. die Kontext(daten) CTX nicht modifiziert werden und stattdessen eine separate Input/Output Variable verwendet werden. Es muss also nicht zwangsläufig eine Kopie angelegt werden, sondern es ist nur sicherzustellen, dass insbesondere die Unterprüfsumme für die Berechnung der Nonce und die Berechnung der digitalen Signatur unverändert bzw. identisch ist.

Um die Nachricht M_SIG mit der digitalen Signatur zu bilden, wird der letzte Nachrichtenteil MB[4] mittels Padding Bits P auf die Nachrichtenteillänge I aufgefüllt. Danach wird SHA256_Final F_H mit CTX bzw. der Unterprüfsumme aufgerufen um die letzte Teilprüfsumme für den letzten Nachrichtenteil zu berechnen und damit die entsprechende Prüfsumme für die Nachricht M_O. Wie in den vorhergehenden Ausführungsbeispielen erläutert, wird nun die digitale Signatur über die Prüfsumme gebildet. Aus der digitalen Signatur und der Nachricht M_O wird dann die digital signierte Nachricht M_SIG gebildet.

Zu Berechnung der Nonce M_RH wird zunächst an den letzten Nachrichtenteil MB[4] (also an das Ende des Nachrichtenteils) die Prüfsumme H_L der vorhergehenden Nachricht angefügt. Damit bildet der Nachrichtenteil d bzw. MB[4] einen überhängenden Nachrichtenteil, da die Prüfsumme eine Nachrichtenlänge von 256 Bit hat und somit die zulässige Nachrichtenteillänge 512 für den Nachrichtenteil d bzw. MB[4] überschritten wird.

Hierdurch entsteht ein fünfter Nachrichtenteil MB[5] bzw. ein Nachrichtenteil d+1 der den letzten Nachrichtenteil bildet. Dieser hat zunächst eine Länge von 44 Bit, die mittels Padding-Bits P auf 512 Bits bzw. auf die entsprechende Nachrichtenteillänge von 512 Bits aufgefüllt werden.

Um nun die Nonce zu berechnen wird für den überhängenden Nachrichtenteil d bzw. MB[4] eine entsprechende Teilprüfsumme mittels SHA256_Update unter Verwendung der Kopie der Unterprüfsumme bzw. CTX K berechnet. Für den nun letzten Nachrichtenteil d+1 bzw. MB[5] wird die letzte Teilprüfsumme gebildet, indem nun SHA256_Final unter Verwendung der Teilprüfsumme des überhängenden Nachrichtenteils verwendet wird. In der Praxis geschieht dies, indem CTX_K beim SHA256_Final-Aufruf übergeben wird, wobei CTX_K durch den SHA256_Update-Aufruf für den überhängenden Nachrichtenteil modifiziert wurde bzw. auf diese Weise die vorhergehenden Teilprüfsummen mitberücksichtigt werden. Mit anderen Worten liefert hier nun der SHA256_Final-Aufruf die Nonce.

Die Fig. 4 zeigt ein weiteres Ausführungsbeispiel der Erfindung als Vorrichtung zum Austausch von Nachrichten.

Die Vorrichtung umfasst erstes Kommunikationsmodul 410, ein erstes Prüfmodul 420, ein erstes Bereitstellungsmodul 430, ein erstes Berechnungsmodul 440, ein zweiten ein zweites Berechnungsmodul und eine optionale erste Kommunikationsschnittstelle 404, die über einen ersten Bus 403 kommunikativ miteinander verbunden sind.

Die Vorrichtung kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den ersten Bus 403 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das erste Kommunikationsmodul 410 ist zum Empfangen einer ersten Nachricht mit einer ersten digitalen Signatur von einem Kommunikationspartner (z. B. einem ersten Kommunikationspartner oder einem zweiten Kommunikationspartner) eingerichtet.

Das erste Kommunikationsmodul 410 kann beispielsweise mittels des Prozessors, der Speichereinheit und einer ersten Programmkomponente implementiert oder realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass die erste Nachricht und die erste digitale Signatur empfangen werden.

Das erste Prüfmodul 420 ist zum Prüfen der ersten digitalen Signatur eingerichtet, wobei zum Prüfen der ersten digitalen Signatur eine erste Prüfsumme berechnet wird.

Das erste Prüfmodul 420 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die erste digitale Signatur geprüft wird.

Das erste Bereitstellungsmodul 430 ist zum Bereitstellen einer zweiten Prüfsumme für eine zweite Nachricht eingerichtet, wobei

- die zweite Nachricht in zweite Nachrichtenteile aufgeteilt wird,
- eine zweite Unterprüfsumme über die zweiten Nachrichtenteile bis auf einen letzten Nachrichtenteil der zweiten Nachrichtenteile gebildet wird,
- die zweite Prüfsumme anhand der zweiten Unterprüfsumme und unter Berücksichtigung des letzten Nachrichtenteils gebildet wird.

Das zweite Berechnungsmodul 430 kann beispielsweise mittels des Prozessors, der Speichereinheit und einer dritten Programmkomponente implementiert oder realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass die zweite Prüfsumme bereitgestellt wird.

Das erste Berechnungsmodul 440 ist zum Bilden einer zweiten digitalen Signatur für die zweite Nachricht anhand der zweiten Prüfsumme eingerichtet.

Das erste Berechnungsmodul 440 kann beispielsweise mittels des Prozessors, der Speichereinheit und einer vierten Programmkomponente implementiert oder realisiert werden, wobei beispielsweise durch ein Ausführen von Programmbefehlen der vierten Programmkomponente der Prozessor derart konfiguriert wird oder durch die Programmbefehle der Prozessor derart konfiguriert ist, dass die zweite digitale Signatur berechnet wird.

Das zweite Berechnungsmodul 450 ist zum Berechnen einer zweiten Nonce anhand der zweiten Unterprüfsumme und unter Berücksichtigung des letzten Nachrichtenteils eingerichtet, wobei

- für diese Berechnung an den letzten Nachrichtenteil die erste Prüfsumme angefügt wird,
- das erste Kommunikationsmodul die zweite Nachricht übermittelt. Dabei wird insbesondere die zweite Nachricht an den Kommunikationspartner übermittelt.

Das zweite Berechnungsmodul 450 kann beispielsweise mittels des Prozessors, der Speichereinheit und einer fünften Programmkomponente implementiert oder realisiert werden, wobei beispielsweise durch ein Ausführen von Programmbefehlen der fünften Programmkomponente der Prozessor derart konfiguriert wird oder durch die Programmbefehle der Prozessor derart konfiguriert ist, dass die zweite Nonce berechnet wird.

Bei weiteren Ausführungsformen der Vorrichtung umfasst die Vorrichtung zumindest ein weiteres Modul oder mehrere weitere Module zur Durchführung des erfindungsgemäßen Verfahrens (oder einer seiner Ausführungsformen/Varianten).

Beispielsweise können ein erster Kommunikationspartner und/oder ein zweiter Kommunikationspartner die Vorrichtung aufweisen. Der Kommunikationspartner der die erste Nachricht schickt kann dann vorzugsweise eine/die Vorrichtung umfassen, welche die Verfahrensschritte aa) bis ad) in Hardware realisiert.

Das Ausführen der Programmbefehle der jeweiligen Module kann hierbei beispielsweise mittels des Prozessors selbst und/oder mittels einer Initialisierungskomponente, beispielsweise ein Lader (engl. loader) oder einer Konfigurationskomponente, erfolgen.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Verfahren zum Austauschen von Nachrichten mit folgenden Verfahrensschritten:

   a) Empfangen einer ersten Nachricht mit einer ersten digitalen Signatur eines ersten Kommunikationspartners durch einen zweiten Kommunikationspartner;
   b) Prüfen der ersten digitalen Signatur durch den zweiten Kommunikationspartner, wobei zum Prüfen der ersten digitalen Signatur eine erste Prüfsumme für die erste Nachricht berechnet wird;
   c) Bereitstellen einer zweiten Prüfsumme für eine zweite Nachricht durch den zweiten Kommunikationspartner, wobei

   - die zweite Nachricht in zweite Nachrichtenteile aufgeteilt wird,
   - eine zweite Unterprüfsumme über die zweiten Nachrichtenteile bis auf einen letzten Nachrichtenteil der zweiten Nachrichtenteile gebildet wird,
   - die zweite Prüfsumme anhand der zweiten Unterprüfsumme und unter Berücksichtigung des letzten Nachrichtenteils gebildet wird;

   d) Bilden einer zweiten digitalen Signatur für die zweite Nachricht anhand der zweiten Prüfsumme durch den zweiten Kommunikationspartner;
   e) Berechnen einer zweiten Nonce anhand der zweiten Unterprüfsumme und unter Berücksichtigung des letzten Nachrichtenteils durch den zweiten Kommunikationspartner, wobei

   - für diese Berechnung an den letzten Nachrichtenteil die erste Prüfsumme angefügt wird;

   f) Senden der zweiten Nachricht mit der zweiten digitalen Signatur an den ersten Kommunikationspartner durch den zweiten Kommunikationspartner;

2. Verfahren nach Anspruch 1, wobei durch den ersten Kommunikationspartner vor dem Empfangen folgende Verfahrensschritte ausgeführt werden:

   aa) Berechnen der ersten Prüfsumme für die erste Nachricht, wobei

   - die erste Nachricht in erste Nachrichtenteile aufgeteilt wird,
   - eine erste Unterprüfsumme über die ersten Nachrichtenteile bis auf einen letzten Nachrichtenteil der ersten Nachrichtenteile gebildet wird,
   - die erste Prüfsumme anhand der ersten Unterprüfsumme und unter Berücksichtigung eines letzten Nachrichtenteils der ersten Nachrichtenteile gebildet wird;

   ab) Bilden der ersten digitalen Signatur für die erste Nachricht anhand der ersten Prüfsumme;
   ac) Berechnen einer ersten Nonce anhand der ersten Unterprüfsumme und unter Berücksichtigung des letzten Nachrichtenteils, wobei

- für diese Berechnung an den letzten Nachrichtenteil der ersten Nachricht ein Initialisierungswert angefügt wird

ad) Senden der ersten Nachricht mit der ersten digitalen Signatur an den zweiten Kommunikationspartner.

3. Verfahren nach Anspruch 1 oder 2, wobei

- für die Nachrichtenteile eine feste Nachrichtenteillänge vorgegeben wird und
- sich für die letzten Nachrichtenteile jeweils eine Restnachrichtenteillänge ergibt, die kleiner oder gleich der Nachrichtenteillänge ist.

4. Verfahren nach Anspruch 3, wobei

- die Nachrichtenteillänge ein ganzzahliges Vielfaches von 64 Bit ist,
- die Nachrichtenteillänge insbesondere 256 Bit oder 512 Bit ist.

5. Verfahren nach einem der vorhergehenden Ansprüche, wobei mittels der Nachrichten Schlüsselmaterial für ein kryptographisches Verfahren zwischen den Kommunikationspartnern ausgetauscht oder etabliert wird.

6. Verfahren nach einem der vorhergehenden Ansprüche, wobei die erste Prüfsumme und/oder die zweite Prüfsumme ein kryptographischer Hash ist.

7. Verfahren nach einem der vorhergehenden Ansprüche, wobei die erste Prüfsumme und/oder die zweite Prüfsumme mittels einer kryptographischen Hashfunktion berechnet werden.

8. Verfahren nach einem der vorhergehenden Ansprüche, wobei

- für weitere Nachrichten jeweils weitere digitale Signaturen und weitere Nonces durch den ersten Kommunikationspartner und/oder den zweiten Kommunikationspartner entsprechend der Verfahrensschritte a)-e) berechnet und die weiteren Nachrichten mit ihren jeweiligen weiteren digitalen Signaturen an den entsprechenden Kommunikationspartner gesendet werden,
- insbesondere jeweils weiter Unterprüfsummen berechnet werden,
- insbesondere bei der Berechnung der jeweiligen weiteren Nonce die Prüfsumme der vorherigen Nachricht berücksichtigt wird.

9. Vorrichtung zum Austausch von Nachrichten umfassend:

- ein erstes Kommunikationsmodul zum Empfangen einer ersten Nachricht mit einer ersten digitalen Signatur;
- ein erstes Prüfmodul zum Prüfen der ersten digitalen Signatur, wobei zum Prüfen der ersten digitalen Signatur eine erste Prüfsumme berechnet wird;
- ein erstes Bereitstellungsmodul zum Bereitstellen einer zweiten Prüfsumme für eine zweite Nachricht, wobei
- die zweite Nachricht in zweite Nachrichtenteile aufgeteilt wird,
- eine zweite Unterprüfsumme über die zweiten Nachrichtenteile bis auf einen letzten Nachrichtenteil der zweiten Nachrichtenteile gebildet wird,
- die zweite Prüfsumme anhand der zweiten Unterprüfsumme und unter Berücksichtigung des letzten Nachrichtenteils gebildet wird;
- ein erstes Berechnungsmodul zum Bilden einer zweiten digitalen Signatur für die zweite Nachricht anhand der zweiten Prüfsumme;
- ein zweites Berechnungsmodul zum Berechnen einer zweiten Nonce anhand der zweiten Unterprüfsumme und unter Berücksichtigung des letzten Nachrichtenteils, wobei
- für diese Berechnung an den letzten Nachrichtenteil die erste Prüfsumme angefügt wird,
- das erste Kommunikationsmodul die zweite Nachricht übermittelt.

10. Computerprogrammprodukt mit Programmbefehlen zur Durchführung der Verfahren nach einem der Ansprüche 1 - 8.

11. Computerprogrammprodukt mit Programmbefehlen für ein Erstellungsgerät, das mittels der Programmbefehle konfiguriert wird, die Vorrichtung nach Anspruch 9 zu erstellen.

12. Bereitstellungsvorrichtung für das Computerprogrammprodukt nach Anspruch 10 oder 11, wobei die Bereitstellungsvorrichtung das Computerprogrammprodukt speichert und/oder bereitstellt.

**Claims**

1. Method for interchanging messages, having the following method steps of:

   a) receiving a first message having a first digital signature of a first communication partner by means of a second communication partner;
   b) checking the first digital signature by means of the second communication partner, wherein a first checksum is calculated for the first message for the purpose of checking the first digital signature;
   c) providing a second checksum for a second message by means of the second communication partner, wherein

   - the second message is divided into second message parts,
   - a second subchecksum is formed using the second message parts, apart from a last message part of the second message parts,
   - the second checksum is formed on the basis of the second subchecksum and taking into account the last message part;

   d) forming a second digital signature for the second message on the basis of the second checksum by means of the second communication partner;
   e) calculating a second nonce on the basis of the second subchecksum and taking into account the last message part by means of the second communication partner, wherein

   - for this calculation, the first checksum is attached to the last message part;

   f) transmitting the second message having the second digital signature to the first communication partner by means of the second communication partner.

2. Method according to Claim 1, wherein the following method steps are carried out by the first communication partner before reception:

   aa) calculating the first checksum for the first message, wherein

   - the first message is divided into first message parts,
   - a first subchecksum is formed using the first message parts, apart from a last message part of the first message parts,
   - the first checksum is formed on the basis of the first subchecksum and taking into account a last message part of the first message parts;

   ab) forming the first digital signature for the first message on the basis of the first checksum;
   ac) calculating a first nonce on the basis of the first subchecksum and taking into account the last message part, wherein

   - for this calculation, an initialization value is attached to the last message part of the first message,

   ad) transmitting the first message having the first digital signature to the second communication partner.

3. Method according to Claim 1 or 2, wherein

   - a fixed message part length is predefined for the message parts, and
   - a remaining message part length which is less than or equal to the message part length respectively results for the last message parts.

4. Method according to Claim 3, wherein

   - the message part length is an integer multiple of 64 bits,

- the message part length is 256 bits or 512 bits, in particular.

5. Method according to one of the preceding claims, wherein key material for a cryptographic method is interchanged between the communication partners or is established by means of the messages.

6. Method according to one of the preceding claims, wherein the first checksum and/or the second checksum is/are a cryptographic hash.

7. Method according to one of the preceding claims, wherein the first checksum and/or the second checksum is/are calculated by means of a cryptographic hash function.

8. Method according to one of the preceding claims, wherein

- further digital signatures and further nonces are respectively calculated for further messages by the first communication partner and/or the second communication partner according to method steps a)-e) and the further messages with their respective further digital signatures are transmitted to the corresponding communication partner,
- further subchecksums are respectively calculated, in particular,
- the checksum of the previous message is taken into account, in particular, when calculating the respective further nonce.

9. Apparatus for interchanging messages, comprising:

- a first communication module for receiving a first message having a first digital signature;
- a first checking module for checking the first digital signature, wherein a first checksum is calculated for the purpose of checking the first digital signature;
- a first provision module for providing a second checksum for a second message, wherein
- the second message is divided into second message parts,
- a second subchecksum is formed using the second message parts, apart from a last message part of the second message parts,
- the second checksum is formed on the basis of the second subchecksum and taking into account the last message part;
- a first calculation module for forming a second digital signature for the second message on the basis of the second checksum;
- a second calculation module for calculating a second nonce on the basis of the second subchecksum and taking into account the last message part, wherein
- for this calculation, the first checksum is attached to the last message part,
- the first communication module transmits the second message.

10. Computer program product having program instructions for carrying out the methods according to one of Claims 1-8.

11. Computer program product having program instructions for a creation device which is configured by means of the program instructions to create the apparatus according to Claim 9.

12. Provision apparatus for the computer program product according to Claim 10 or 11, wherein the provision apparatus stores and/or provides the computer program product.

**Revendications**

1. Procédé d'échange de messages comprenant les étapes de procédé suivantes :

a) réception d'un premier message avec une première signature numérique d'un premier partenaire de communication par un deuxième partenaire de communication ;
b) vérification de la première signature numérique par le deuxième partenaire de communication, dans lequel pour la vérification de la première signature numérique, une première somme de vérification pour le premier message est calculée ;
c) fourniture d'une deuxième somme de vérification pour un deuxième message par le deuxième partenaire de communication, dans lequel

- le deuxième message est réparti en des deuxièmes parties de message,
- une deuxième sous-somme de vérification est formée sur les deuxièmes parties de message jusqu'à une dernière partie de message des deuxièmes parties de message,
- la deuxième somme de vérification est formée à l'aide de la deuxième sous-somme de vérification et en tenant compte de la dernière partie de message ;

d) formation d'une deuxième signature numérique pour le deuxième message à l'aide de la deuxième somme de vérification par le deuxième partenaire de communication ;
e) calcul d'un deuxième nonce à l'aide de la deuxième sous-somme de vérification et en tenant compte de la dernière partie de message par le deuxième partenaire de communication, dans lequel

- pour ce calcul, la première somme de vérification est jointe à la dernière partie de message ;

f) émission du deuxième message avec la deuxième signature numérique au premier partenaire de communication par le deuxième partenaire de communication ;

**2.** Procédé selon la revendication 1, dans lequel les étapes de procédé suivantes sont exécutées par le premier partenaire de communication avant la réception :

aa) calcul de la première somme de vérification pour le premier message, dans lequel

- le premier message est réparti en premières parties de message,
- une première sous-somme de vérification est formée sur les premières parties de message jusqu'à une dernière partie de message des premières parties de message,
- la première somme de vérification est formée à l'aide de la première sous-somme de vérification en tenant compte d'une dernière partie de message des premières parties de message ;

ab) formation de la première signature numérique pour le premier message à l'aide de la première somme de vérification ;
ac) calcul d'un premier nonce à l'aide de la première sous-somme de vérification et en tenant compte de la dernière partie de message, dans lequel

- pour ce calcul, une valeur d'initialisation est jointe à la dernière partie de message du premier message

ad) envoi du premier message avec la première signature numérique au deuxième partenaire de communication.

**3.** Procédé selon la revendication 1 ou 2, dans lequel

- une longueur de partie de message fixe est prédéfinie pour les parties de message et
- une longueur de partie de message restante respective résulte pour les dernières parties de message, qui est inférieure ou égale à la longueur de partie de message.

**4.** Procédé selon la revendication 3, dans lequel

- la longueur de partie de message est un multiple entier de 64 bits,
- la longueur de partie de message est en particulier de 256 bits ou 512 bits.

**5.** Procédé selon l'une des revendications précédentes, dans lequel au moyen des messages, du matériel de clé pour un procédé cryptographique est échangé ou établi entre les partenaires de communication.

**6.** Procédé selon l'une des revendications précédentes, dans lequel la première somme de vérification et/ou la deuxième somme de vérification est un hachage cryptographique.

**7.** Procédé selon l'une des revendications précédentes, dans lequel la première somme de vérification et/ou la deuxième somme de vérification sont calculées au moyen d'une fonction de hachage cryptographique.

**8.** Procédé selon l'une des revendications précédentes, dans lequel

- pour d'autres messages, respectivement d'autres signatures numériques et d'autres nonces sont calculés par le premier partenaire de communication et/ou le deuxième partenaire de communication conformément aux étapes de procédé a)-e) et les autres messages sont envoyés aux partenaires de communication correspondants avec leurs autres signatures numériques respectives,
- en particulier respectivement d'autre sous-sommes de vérification sont calculées,
- en particulier, lors du calcul des autres nonces respectifs, la somme de vérification du message précédent est prise en compte.

**9.** Dispositif d'échange de messages comprenant :

- un premier module de communication pour recevoir un premier message avec une première signature numérique ;
- un premier module de vérification pour vérifier la première signature numérique, dans lequel une première somme de vérification est calculée pour vérifier la première signature numérique ;
- un premier module de fourniture pour fournir une deuxième somme de vérification pour un deuxième message, dans lequel
- le deuxième message est réparti en des deuxièmes parties de message,
- une deuxième sous-somme de vérification est formée sur les deuxièmes parties de message jusqu'à une dernière partie de message des deuxièmes parties de message,
- la deuxième somme de vérification est formée à l'aide de la deuxième sous-somme de vérification et en tenant compte de la dernière partie de message ;
- un premier module de calcul pour former une deuxième signature numérique pour le deuxième message à l'aide de la deuxième somme de vérification ;
- un deuxième module de calcul pour former un deuxième nonce à l'aide de la deuxième sous-somme de vérification et en tenant compte de la dernière partie de message, dans lequel
- pour ce calcul, la première somme de vérification est jointe à la dernière partie de message,
- le premier module de communication transmet le deuxième message.

**10.** Produit programme d'ordinateur avec des commandes de programme pour exécuter le procédé selon l'une des revendications 1 - 8.

**11.** Produit programme d'ordinateur avec des commandes de programme pour un appareil d'établissement qui est configuré pour établir le dispositif selon la revendication 9 au moyen des commandes de programme.

**12.** Dispositif de fourniture pour le produit programme d'ordinateur selon la revendication 10 ou 11, dans lequel le dispositif de fourniture sauvegarde et/ou fournit le produit de programme informatique.

## FIG 1

## FIG 2

## FIG 3

|   | 512 bits | 512 bits | 512 bits | 512 bits | 512 bits | 512 bits |
|---|---|---|---|---|---|---|

M_O

| MB [0] | MB [1] | MB [2] | MB [3] | |
|---|---|---|---|---|

— MB [4]

I_H    U_H    U_H    U_H    C_H

MB [4]

M_SIG

| MB [0] | MB [1] | MB [2] | MB [3] | | P |
|---|---|---|---|---|---|

F_H

MB [4]    MB [4]

M_RH

| MB [0] | MB [1] | MB [2] | MB [3] | | H_L | P |
|---|---|---|---|---|---|---|

U_H    F_H

## FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8531247 B2
- US 8892616 B2
- US 8300811 B2
- US 9147088 B2
- EP 2605445 B1
- EP 2870565 A1
- EP 2891102 A1
- US 8843761 B2